# EUROPEAN PATENT SPECIFICATION

(11) **EP 2 084 432 B1**
(45) Date of publication and mention of the grant of the patent: **20.02.2013**
(21) Application number: 07835336.4
(22) Date of filing: 18.10.2007
(51) Int. Cl.: F16H 57/04

(54) **OILING DEVICE, GEARBOX AND A METHOD TO LUBRICATE A GEARBOX**
SCHMIERVORRICHTUNG, GETRIEBE UND VERFAHREN ZUM SCHMIEREN EINES GETRIEBES
DISPOSITIF DE GRAISSAGE, BOÎTE DE VITESSES ET PROCÉDÉ POUR LUBRIFIER UNE BOÎTE DE VITESSES

(30) Priority: 25.10.2006 SE 0602239
(43) Date of publication of application: 05.08.2009
(73) Proprietor: Scania CV AB (PUBL), 151 87 Södertälje (SE)
(72) Inventor: GRENFELDT, Johan, 155 94 Nykvarn (SE); HAGBERG, Kenneth, 151 45 Södertälje (SE)
(86) International application number: PCT/SE2007/050751
(87) International publication number: WO 2008/051155

(56) References cited:
- EP-A2- 1 016 808
- DE-A1- 10 337 908
- DE-A1- 19 912 328
- PATENT ABSTRACTS OF JAPAN & JP 2005 325925 A (TOYOTA MOTOR CORP) 24 November 2005
- PATENT ABSTRACTS OF JAPAN & JP 2002 340152 A (NISSAN MOTOR CO LTD) 27 November 2002
- PATENT ABSTRACTS OF JAPAN & JP 61 136059 A (MITSUBISHI HEAVY IND LTD) 23 June 1986

## Description

### TECHNICAL FIELD

The invention relates to a lubrication device for a gearbox, comprising a plurality of nozzles for local oil supply via an oil pump from an oil source to mutually engaging gearwheel pairs in the gearbox. The invention also relates to a gearbox provided with such a lubrication device and a method of lubricating a gearbox during operation.

### BACKGROUND

Gearboxes, e.g. for motor vehicles, are usually filled with oil to a level which ensures sufficient lubrication and cooling of loaded gearwheels. When the oil causes resistance to the rotation of the gearwheels, the result is power losses. There is therefore a need to reduce these power losses by lowering the oil level without thereby impairing the oil supply to the gearwheels.

A gearbox with a device of the kind indicated in the introduction is known from US-A-5 099 715. That device can reduce power losses by lowering the oil level in the gearbox and pumping oil locally into the regions in the gearbox which are to be lubricated via a plurality of nozzles. Part of the recovered power losses is nevertheless inevitably lost to the necessary pump power.

DE 199 12328 A1 discloses a lubrication device according to the preamble of claim 1 and a method according to the preamble of claim 5.

### SUMMARY OF THE INVENTION

An object of the invention is therefore to further develop the state of the art by reducing the pump power required for the oil supply via the nozzles. This object is solved by a lubrication device according to claim 1 and a method according to claim 5. Dependent claims 2-4 and 6-8 concern particular embodiments of claim 1 and 5 respectively.

The total power requirement of the oil pump can thus be reduced.

In an embodiment, the control unit is an electronic control unit. In a further embodiment, the control unit is a mechanical control unit.

The loaded gearwheel pairs can be identified by detection of a gear position in the gearbox. The relationship between a gear position detected by a sensor and the relating loaded gearwheel pairs can then be put into a programme of a computer which controls the gearbox and the individual adjustment of the oil supply. The computer may also, within the scope of the invention, be adapted to adjusting the oil supply to the loaded gearwheel pairs according to the torque transmitted. This may also apply in the embodiment with the mechanical control unit. The torque may be detected by various types of sensor situated in the gearbox or associated with other components of the power transmission in which the gearbox is fitted.

In particular, however, the valves may be adjusted so that the oil supply is only provided to the gearwheel pairs which are at the time loaded by driving engagement, i.e. the gearwheel pairs which are actually transmitting torque in the gearbox.

The adjustment may be effected by an electronic control unit for the oil supply, in which case the electronic control unit will switch the valves which deliver the oil supply to the loaded gearwheel pairs.

Other features and advantages of the invention are indicated by the claims and the description below of embodiment examples.

### BRIEF DESCRIPTION OF THE DRAWINGS

FIG. 1 depicts partly in section, with portions cut away, a schematically illustrated gearbox provided with a lubrication device according to the invention;
FIG. 2 is a sectional view along the line 2-2 in FIG. 1;
FIGS. 3A, B depict schematically two different states of part of a gearbox with an alternative lubrication device according to the invention; and
FIG. 4 depicts in more detail part of a mechanical control unit according to the invention.

### DETAILED DESCRIPTION OF EMBODIMENT EXAMPLES

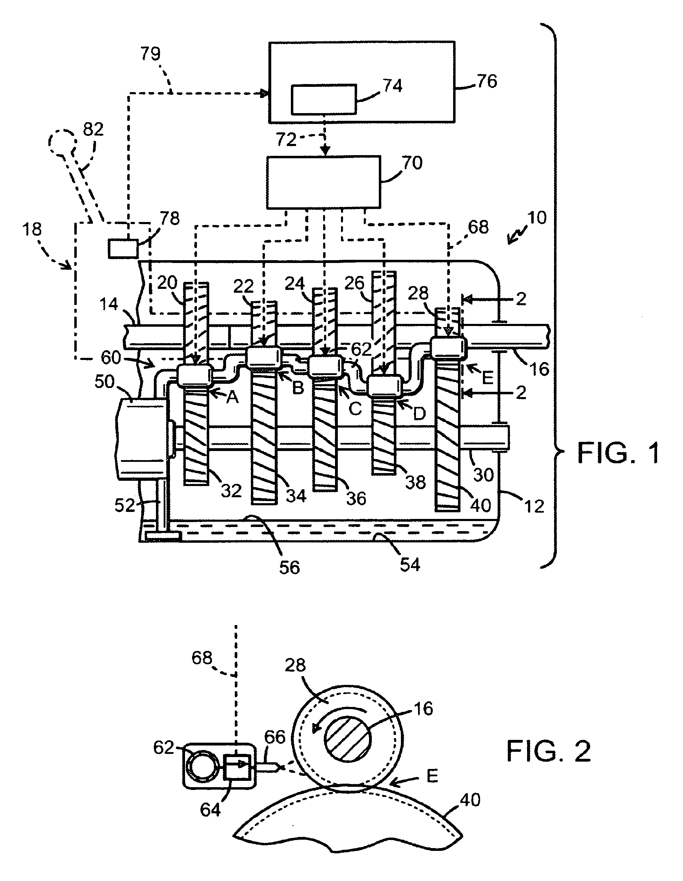

The schematic illustration in FIG. 1 depicts part of a vehicle gearbox 10. The gearbox 10 has a gearbox housing 12 which supports a mainshaft 14, 16 and a countershaft 30. A number of gearwheels 20, 22, 24, 26 and 28 on the mainshaft 14, 16 are in constant engagement A, B, C, D, E with a corresponding number of gearwheels 32, 34, 36, 38 and 40 respectively on the countershaft 30. An output shaft portion 16 of the mainshaft 14, 16 is connected engageably and disengageably, in a manner not shown in detail, to an input shaft portion 14 via a connecting device of a gearchange mechanism 18. The gearchange mechanism 18 may also in a conventional manner selectively engage/disengage the gearwheels 20, 22, 24, 26, 28 with/from the mainshaft 14, 16 in order to effect gearchanging in the gearbox 10. In the schematic example according to FIG. 1, the gearbox 10 has four gear steps in addition to the step in which the countershaft is not active, with the shaft portions 14, 16 connected together and none of the gearwheels 20-28 in engagement with the shaft portions 14, 16. At each of these four gear steps, there are always two pairs of gearwheels in loaded mutual engagement, i.e. the combinations A+B or A+C or A+D or A+E. The gearbox may within the scope of the invention be configured in many different (undepicted) ways, e.g. it may normally also have a reverse gear to which the invention may likewise be applied.

According to the invention, the gearbox 10 has a lubrication device 60 for selectively supplying oil to the various mutually engaging gearwheel pairs in accordance with a varying load upon these gearwheel pairs. In the embodiments described below, oil is only supplied to the gearwheels which are loaded at the time, while other gearwheel pairs are not supplied with any oil. The invention may nevertheless be varied in many different ways within the scope of the claims set out below. It is for example always possible to have the unloaded gearwheel pairs, i.e. the gearwheel pairs which are actually only loaded by idling friction, receive also a minimum or small oil supply. This applies, for example, in the case of a fully or partly developed "dry sump" where the level of oil 56 in the oil pan 54 of the gearbox 10 reaches only partly or not at all up to the gearwheels or one or more of the gearwheels. It is also possible, particularly in the embodiment described below with the electronic control unit 70 (FIG. 1), for the oil supply to be varied according to the torque transmitted via the loaded gearwheel pairs, by varying the degree of opening of valves 64 described below. The torque transmitted may be detected by various sensors, such as undepicted power sensors on shafts in the gearbox or other components of the vehicle's driveline.

The lubrication device 60 is supplied with oil from an oil pump 50 which draws the oil from the oil pan 54 of the gearbox 10 via a suction line 52. The oil pump 50, which may in a conventional manner be driven by, for example, the countershaft 30, may in an undepicted known manner also be adapted to supplying the gearchange mechanism 18 and the inner bearings of the gearwheels 20-28 with oil.

The lubrication device 60 has a supply line 62 connected to the pressure side of the pump 50 and extending past all of the gearwheel pairs which are to be supplied with oil.

As more particularly illustrated in FIG. 2, a valve 64 of, for example, electromagnetic type is provided in the region of each gearwheel pair between the line 62 and a spray nozzle 66. The valve 64 can open and close an oil supply to the respective nozzle 66 which can itself locally spray oil towards or in the vicinity of the respective gear engagement A-E. As indicated in FIG. 2, the nozzle 66 may for example spray towards the teeth of, in this case, the gearwheel 28 oil which soon makes it way into the loaded gear engagement E.

In the embodiment example according to FIGS. 1 and 2, each valve 64 is controlled via signal lines 68 from an electronic control unit 70. The control unit 70 is in communication via a signal line 72 with a signal transmitter 74 which may be part of a vehicle computer 76 of the vehicle in which the gearbox 10 is fitted. The signal transmitter 74 receives information continuously from the vehicle computer 76 which detects a current gear position via a signal line 79 from one or more position sensors 78 in the gearchange mechanism 18. The computer 76 identifies by means of a programme the gear engagement which at the time is loaded at this gear position and therefore needs to be supplied with oil. If for example the gear engagement A+E is loaded and needs to be supplied with oil, the control unit 70 will ensure that the appropriate pair of signal lines 68 receive signals to open the appropriate pair of valves 64, whereas the other valves will receive no signal and will therefore remain closed.

As mentioned above and indicated in FIG. 1, the oil level in the oil pan 54 need not be so high that it comes into contact with the gearwheels on the countershaft 30. Within the scope of the invention, however, the oil level may be high enough to at least partly contact one or more of the gearwheels on the countershaft 30, which gearwheels may then be supplied with a small amount of oil or no oil from the lubrication device 60.

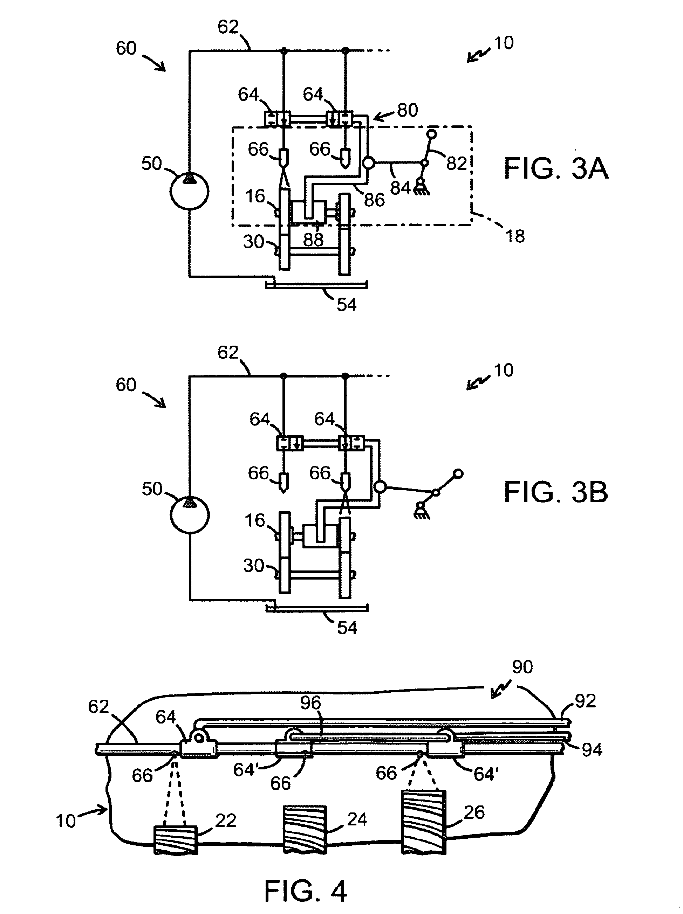

FIGS. 3A and B depict schematically part of a gearbox 10 provided with an alternative mechanical lubrication device according to the invention. The control unit 80 for the valves 64 is in this case connected to the gearchange mechanism 18 and the following is an example of how it functions during a gearchange operation:
With reference to the schematic illustration in FIG. 3A, the gearchange mechanism 18 is acted upon by, for example, a gear lever 82 via a link 84 and a gearchange arm 86 which via a selector fork 88 moves a shift sleeve 86 from the position in FIG. 3A to the position in FIG. 3B. This change in the gearbox 10 means that the torque from the countershaft 30 to the mainshaft portion 16 is transferred from the left gearwheel pair to the right gearwheel pair in FIGS. 3A and B. The control unit 80, which is mechanically connected to each valve 64 (only two are depicted in FIGS. 3A and B), switches simultaneously each valve 64 so that the oil supply is switched to the respective nozzle 66 which can distribute oil flow to the gearwheel pair which is then loaded by the torque.

In an undepicted manner, other gearchange arms in the gearbox 10 may in a similar manner be connected to the control unit 80 which switches other valves to supply other loaded gearwheels with oil when corresponding selector forks move other shift sleeves to other gear positions in the gearbox, so that all the gear engagements are supplied with oil when they are loaded.

FIG. 4 illustrates the principle of how part of a control unit 90 may be constructed. The supply line 62 may, as previously considered, be of the "common rail" type, but in this case with movable valves 64, 64' of a digital ON/OFF type. The nozzles 66 may where appropriate be provided with mutually different magnitudes of flow cross-section and spread angles in order, according to need, to provide respective different magnitudes of oil flow at respective different distances from the gearwheels. As illustrated in FIG. 4, push and pull rods 92 and 94 of the control unit 90 may switch either a separate valve 64 or a pair of valves 64', 64' connected together by a link 96. In an undepicted manner, these valves 64, 64' may alternatively be switched by other actuators, e.g. electromagnetic, hydraulic or pneumatic, via an electronic control unit, such as the control unit 70 depicted in FIG. 1.

In the above embodiment examples, a separate valve 64 is provided for each nozzle 66, but it is also possible for the valve associated with each nozzle to be a single common valve or a small number of common valves for all the respective nozzles (not depicted).

The description set out above is primarily intended to facilitate comprehension, and no limitations of the invention are to be construed therefrom. The modifications which will be obvious to one skilled in the art upon perusing the description can be implemented without deviating from the scope of the claims set out below.

## Claims

1. A lubrication device (60) for a gearbox (10) comprising a main shaft (14,16), a counter shaft (30) and a number of gearwheels (20, 22, 24, 26, 28) on the main shaft (14, 16) in constant engagement (A, B, C, D, E) with a corresponding number of gearwheels (32, 24, 26, 28, 40) on the counter shaft (30), which lubrication device comprises a plurality of nozzles (66) for local oil supply via an oil pump (50) from an oil source (54) to mutually engaging gearwheel pairs in the gearbox, a controllable valve (64) provided for each nozzle (66), a control unit (70, 80, 90) for controlling the valves (64), during gearchanging in the gearbox (10), ***characterised* in that** the control unit (70, 80, 90) is adapted to adjust the oil supply individually to loaded gearwheel pairs according to the degree of torque transmitted by them.

2. A lubrication device according to claim 1, whereby said control unit comprises an electronic control unit (70).

3. A lubrication device according to claim 2, whereby said control unit comprises a mechanical control unit (80, 90).

4. A gearbox (10) provided with a lubrication devise (60) according to any one of the foregoing claims.

5. A method of lubricating a gearbox during operation which gearbox comprises a main shaft (14, 16), a counter shaft (30) and a number of gearwheels (20, 22, 24, 26, 28) on the main shaft (14, 16) in constant engagement (A, B, C, D, E) with a corresponding number of gearwheels (32, 24, 26, 28, 40) on the counter shaft (30), the method comprising local oil supply through several nozzles (66) via an oil pump (50) from an oil source (54) to mutually engaging gearwheel pairs in the gearbox, ***characterised* by** individual adjustment of the oil supply so that only the gearwheel pairs which at the time are loaded by driving engagement receive oil supply according to the degree of torque transmitted by them.

6. A method according to claim 5, comprising identification of loaded gearwheel pairs by detection of a gear position in the gearbox.

7. A method according to any one of claims 5-6, comprising effecting the adjustment via an electronic control unit for the oil supply.

8. A method according to any one of claims 5, 6 and 7, comprising effecting the adjustment by setting a gear position in the gearbox.

## Patentansprüche

1. Schmiervorrichtung (60) für ein Getriebe (10), umfassend eine Hauptwelle (14, 16), eine Vorgelegewelle (30) und eine Anzahl an Zahnrädern (20, 22, 24, 26, 28) auf der Hauptwelle (14, 16) in konstantem Eingriff (A, B, C, D, E) mit einer entsprechenden Anzahl an Zahnrädern (32, 24, 26, 28, 40) auf der Vorgelegewelle (30), wobei die Schmiervorrichtung eine Mehrzahl an Düsen (66) für die lokale Ölversorgung über eine Ölpumpe (50) aus einer Ölquelle (54) an miteinander im Eingriff befindliche Zahnradpaare in dem Getriebe, ein für jede Düse (66) vorgesehenes steuerbares Ventil (64), sowie eine Steuereinheit (70, 80, 90) zum Steuern der Ventile (64) während des Gangwechselns in dem Getriebe (10) umfasst, **dadurch gekennzeichnet, dass** die Steuereinheit (70, 80, 90) dazu eingerichtet ist, die Ölversorgung individuell auf unter Last stehende Zahnradpaare entsprechend dem Grad des von ihnen übertragenen Drehmoments anzupassen.

2. Schmiervorrichtung nach Anspruch 1, wobei die Steuereinheit eine elektronische Steuereinheit (70) umfasst.

3. Schmiervorrichtung nach Anspruch 2, wobei die Steuereinheit eine mechanische Steuereinheit (80, 90) umfasst.

4. Getriebe (10), versehen mit einer Schmiervorrichtung (60) nach einem der vorangegangenen Ansprüche.

5. Verfahren, um ein Getriebe im Betrieb zu schmieren, wobei das Getriebe eine Hauptwelle (14, 16), eine Vorgelegewelle (30) und eine Anzahl an Zahnrädern (20, 22, 24, 26, 28) auf der Hauptwelle (14, 16) in konstantem Eingriff (A, B, C, D, E) mit einer entsprechenden Anzahl an Zahnrädern (32, 24, 26, 28, 40) auf der Vorgelegewelle (30) umfasst, wobei das Verfahren die lokale Ölversorgung durch mehrere Düsen (66) über eine Ölpumpe (50) aus einer Ölquelle (54) auf miteinander im Eingriff befindliche Zahnradpaare in dem Getriebe umfasst, **gekennzeichnet durch** individuelles Anpassen der Ölversorgung, so dass nur diejenigen Zahnradpaare, welche zu der Zeit **durch** antreibenden Eingriff belastet sind, eine dem Grad des **durch** sie übertragenen Drehmoments entsprechende Ölversorgung erhalten.

6. Verfahren nach Anspruch 5, umfassend ein Identifizieren belasteter Zahnradpaare durch Erkennen einer Gangstellung in dem Getriebe.

7. Verfahren nach einem der Ansprüche 5-6, umfassend ein Bewirken der Anpassung über eine elektronische Steuerungseinheit für die Ölversorgung.

8. Verfahren nach einem der Ansprüche 5, 6 und 7, umfassend ein Bewirken der Anpassung bei Festlegen einer Gangstellung in dem Getriebe.

## Revendications

1. Dispositif de lubrification (60) pour une boîte de vitesses (10) comprenant un arbre principal (14, 16), un contre-arbre (30) et un certain nombre de roues dentées (20, 22, 24, 26, 28) sur l'arbre principal (14, 16) en engrènement constant (A, B, C, D, E) avec un nombre correspondant de roues dentées (32, 24, 26, 28, 40) sur le contre-arbre (30), ce dispositif de lubrification comprenant une pluralité de buses (66) pour une délivrance d'huile locale par l'intermédiaire d'une pompe à huile (50) à partir d'une source d'huile (54) à des paires de roues dentées s'engrenant mutuellement dans la boîte de vitesses, une vanne pouvant être commandée (64) disposée pour chaque buse (66), une unité de commande (70, 80, 90) pour commander les vannes (64), durant un changement de vitesse dans la boîte de vitesses (10), **caractérisé en ce que** l'unité de commande (70, 80, 90) est adaptée de façon à régler la délivrance d'huile individuellement vers des paires de roues dentées chargées en fonction du degré de couple transmis par celles-ci.

2. Dispositif de lubrification selon la revendication 1, dans lequel ladite unité de commande comprend une unité de commande électronique (70).

3. Dispositif de lubrification selon la revendication 2, dans lequel ladite unité de commande comprend une unité de commande mécanique (80, 90).

4. Boîte de vitesses (10) munie d'un dispositif de lubrification (60) selon l'une quelconque des revendications précédentes.

5. Procédé de lubrification d'une boîte de vitesses durant le fonctionnement, cette boîte de vitesses (10) comprenant un arbre principal (14, 16), un contre-arbre (30) et un certain nombre de roues dentées (20, 22, 24, 26, 28) sur l'arbre principal (14, 16) en engrènement constant (A, B, C, D, E) avec un nombre correspondant de roues dentées (32, 24, 26, 28, 40) sur le contre-arbre (30), le procédé comprenant une délivrance d'huile locale à travers plusieurs buses (66) par l'intermédiaire d'une pompe à huile (50) à partir d'une source d'huile (54) à des paires de roues dentées s'engrenant mutuellement dans la boîte de vitesses, **caractérisé par** un réglage individuel de la délivrance d'huile de telle sorte que seules les paires de roues dentées qui sont chargées à ce moment par un engrènement d'entraînement reçoivent une alimentation en huile en fonction du degré de couple transmis par celles-ci.

6. Procédé selon la revendication 5, comprenant l'identification de paires de roues dentées chargées par détection d'une position de vitesse dans la boîte de vitesses.

7. Procédé selon l'une quelconque des revendications 5 à 6, comprenant la réalisation du réglage par l'intermédiaire d'une unité de commande électronique pour la délivrance d'huile.

8. Procédé selon l'une quelconque des revendications 5, 6 et 7, comprenant la réalisation du réglage par l'établissement d'une position de vitesse dans la boîte de vitesses.
